# EUROPEAN PATENT SPECIFICATION

(11) **EP 2 988 060 B1**
(45) Date of publication and mention of the grant of the patent: **03.01.2018**
(21) Application number: 14785414.5
(22) Date of filing: 13.03.2014
(51) Int. Cl.: F21S 8/12, B60Q 1/04, F21W 101/10, F21Y 101/00

(54) **VEHICLE LAMP**
FAHRZEUGLEUCHTE
LAMPE DE VÉHICULE

(30) Priority: 15.04.2013 JP 2013084739
(43) Date of publication of application: 24.02.2016
(73) Proprietor: Koito Manufacturing Co., Ltd., Tokyo 108-8711 (JP)
(72) Inventor: SATO Noriko, Shizuoka-shi Shizuoka 424-8764 (JP)
(74) Representative: Grünecker Patent- und Rechtsanwälte PartG mbB
(86) International application number: PCT/JP2014/056760
(87) International publication number: WO 2014/171237

(56) References cited:
- EP-A1- 2 559 935
- EP-A2- 0 291 475
- EP-A2- 1 130 416
- EP-A2- 1 433 654
- DE-A1-102005 043 594
- JP-A- S63 312 245
- JP-A- 2002 109 916
- JP-A- 2012 224 317
- JP-A- 2012 227 102

## Description

### Technical Field

The present invention relates to a technical field relating to a vehicle lamp having a rotary reflector which has a reflecting surface formed thereon and a light control member which controls light reflected by the rotary reflector.

### Background Art

In vehicle lamps, there is, for example, a vehicle lamp in which a lamp unit having a light source is disposed in an interior of a lamp shell which is defined by a cover and a lamp housing.

In lamp units of this type, there is a lamp unit having a configuration in which light emitted from a light source is reflected by a rotary reflector. As such a configuration, there is, for example, a configuration in which a polygonal wheel mirror is provided as a rotary reflector which can rotate about a rotating axis as a fulcrum and which has a plurality of mirror surfaces (reflecting surfaces) (refer to Patent Literature 1 below, for example).

In a vehicle lamp described in Patent Literature 1, light emitted from a light source is shone on to the mirror surfaces as a polygonal wheel mirror rotates. This can change the shining direction and range of the light which is reflected on the mirror surfaces.

### Prior Art Literature

### Patent Literature

Patent Literature 1: JP-W-2008-539537

EP 0 291 475 A2 discloses a vehicle lamp according to the preamble of claim 1.

### Summary of the Invention

In the vehicle lamp described in Patent Literature 1, however, the plurality of reflecting surfaces which reflect light are formed parallel to the rotating axis. Because of this, the shining direction and range of the light which is reflected when the rotary reflector rotates are limited, causing a problem that the degree of freedom in setting the shining direction and range is low.

Then, an object of the invention is to improve the degree of freedom in setting the shining direction and range of light which is reflected by a rotary reflector.

### Means for Solving the Problem

According to the first aspect of the invention, there is provided a vehicle lamp in which a lamp unit is provided in an interior of a lamp shell which is defined by a cover and a lamp housing, in which the lamp unit comprises: a light source which emits light; a rotary reflector which is rotated about a rotating axis as a fulcrum and which has a plurality of reflecting surfaces which reflect light emitted from the light source; and a light control member on which lights reflected on the plurality of reflecting surfaces are incident and which controls the incident lights, and angles at which the plurality of reflecting surfaces are inclined relative to the rotating axis are different from one another so that an incident position where the reflected lights are incident on the light control member changes according to a rotating position of the rotary reflector wherein the light control member is a fixed reflector and the lights which are reflected on the reflecting surfaces and are then controlled by the light control member so as to be shone on to an illumination area are each shone into a straight line for each reflecting surface in the illumination area.

This allows the respective lights reflected on the reflecting surfaces of the rotary reflector to be incident on the light control member in different positions, enables the lights reflected by the rotary reflector to be controlled by the fixed reflector, and enables the lights which are straight in shape to be shone on to the illumination area in different shining positions.

According to a second aspect of the invention, in the vehicle lamp of the invention, it is desirable that the light source is turned on and off or varies its brightness according to a rotating position of the rotary reflector.

According to a third aspect of the invention, in the vehicle lamp of the invention, it is desirable that the light control member controls the lights incident thereon so as to be collected below a horizontal line in a shining direction.

This enables the lights to be shone downwards below the horizontal line.

### Advantage of the Invention

According to the invention, the reflecting surfaces of the rotary reflector are inclined at the different angles relative to the rotating axis thereof, so that the incident position of the reflected lights are incident on the light control member changes according to the rotating position of the rotary reflector. Because of this, when the rotary reflector is rotated, the shining direction and range of the lights shone when the rotary reflector is rotated are not limited, thereby making it possible to improve the degree of freedom relating to the shining direction and range of the lights which are reflected by the rotary reflector to be shone.

### Brief Description of Drawings

Fig. 1 shows an embodiment of a vehicle lamp of the invention and is a schematic front view of the vehicle lamp.
Fig. 2 is a schematic vertical sectional view of the vehicle lamp.
Fig. 3 is a perspective view of a lamp unit.
Fig. 4 is a schematic side view showing, partially in section, a path of light reflected by a first reflecting surface.
Fig. 5 is a schematic side view showing, partially in section, a path of light reflected by a second reflecting surface.
Fig. 6 is a schematic side view showing, partially in section, a path of light reflected by a third reflecting surface.
Fig. 7 is a schematic side view showing, partially in section, a path of light reflected by a fourth reflecting surface.
Fig. 8 is a schematic side view showing, partially in section, a path of light reflected by a fifth reflecting surface.
Fig. 9 is a schematic side view showing, partially in section, a path of light reflected by a sixth reflecting surface.
Fig. 10 is a schematic front view showing a path of light when the first reflecting surface is inclined rightwards.
Fig. 11 is a schematic front view showing a path of light when the first reflecting surface is directed downwards.
Fig. 12 is a schematic front view showing a path of light when the first reflecting surface is inclined leftwards.
Fig. 13 is a schematic diagram showing lights shone on to an illumination area when a light source is turned on.
Fig. 14 is a schematic diagram showing lights shone on to the illumination area when the light source is turned on and off.
Fig. 15 is a schematic diagram showing lights shone on to the illumination area when timings at which the light source is turned on and off are controlled.

### Mode for Carrying out the Invention

Hereinafter, referring to the accompanying drawings, an example of a mode for carrying out a vehicle lamp of the invention will be described.

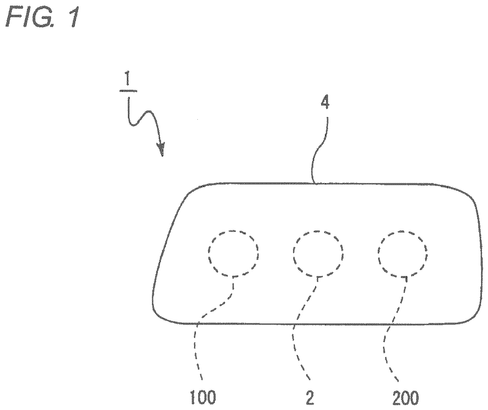

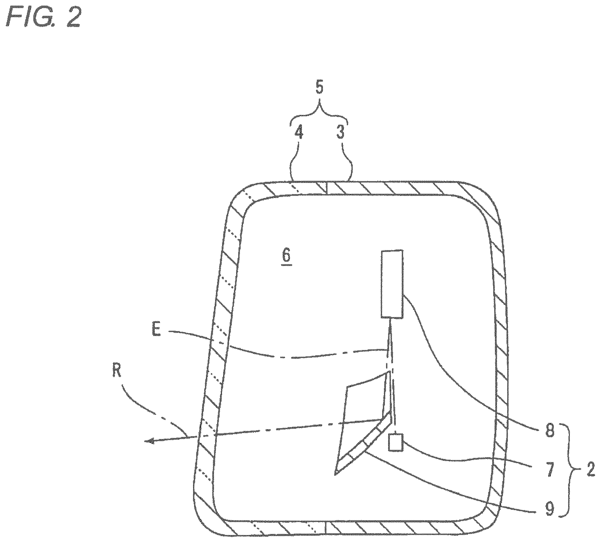

A vehicle lamp 1 includes a first lamp unit 2, a second lamp unit 100 and a third lamp unit 200 (refer to Figs. 1 and 2). The first lamp unit 2 is provided as, for example, a drawing lamp unit. The second lamp unit 100 is provided as, for example, a high beam lamp unit. The third lamp unit 200 is provided as, for example, a low beam limp unit. In the vehicle lamp I, the first lamp unit 2 may be provided as a low beam lamp unit. Additionally, the first lam unit 2 may also be provided to function as both a drawing lamp unit and a high beam lamp unit, and as this occurs, either the second lamp unit 100 or the third lamp unit 200 is not provided.

The vehicle lamp I has a lamp shell 5 which is defined by a lamp body 3 (an example of a lamp housing) which is opened in one direction and a cover 4 which is attached to an open end portion of the lamp body 3. An interior of the lamp shell 5 is formed as a lamp compartment 6. The first lamp unit 2, the second lamp unit 100 and the third lamp unit 200 are disposed in the lamp compartment 6 so as to be spaced apart from one another in a left-to-right direction.

The first lamp unit 2, the second lamp unit 100 and the third lamp unit 200 are supported by members, not shown, in the interior of the lamp shell 5.

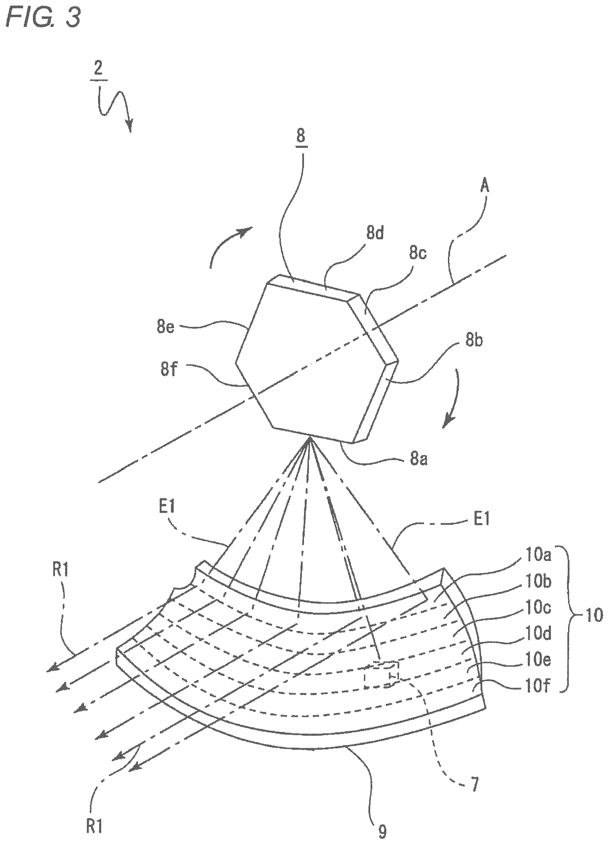

The first lamp unit 2 has a light source 7, a rotary reflector 8 and a light control member 9 (refer to Figs. 2 and 3). The light source 7, the rotary reflector 8 and the light control member 9 are supported by members, not shown, in the interior of the lamp shell 5.

For example, a semiconductor laser (LD: Laser Diode) or a light emitting diode (LED: Light Emitting Diode) is used for the light source 7. The light source 7 emits light upwards towards the rotary reflector 8 and is turned on and off according to a rotating operation of the rotary reflector 8.

The rotary reflector 8 is disposed above the light source 7. The rotary reflector 8 is made up of, for example, a thin, substantially hexagonal plate-like member. The rotary reflector 8 is disposed so that its thickness direction corresponds to a front-to-rear direction and is rotated about a rotating axis A which extends in the front-to-rear direction as a fulcrum by a rotational drive mechanism, not shown.

An outer circumferential surface of the rotary reflector 8 is formed into a first reflecting surface 8a, a second reflecting surface 8b, a third reflecting surface 8c, a fourth reflecting surface 8d, a fifth reflecting surface 8e, and a sixth reflecting surface 8f. The individual reflecting surfaces of the rotary reflector 8 reflect light emitted from the light source 7 in predetermined directions.

The reflecting surfaces 8a, 8b, 8c, 8d, 8e, 8f are positioned sequentially in this order in a circumferential direction.

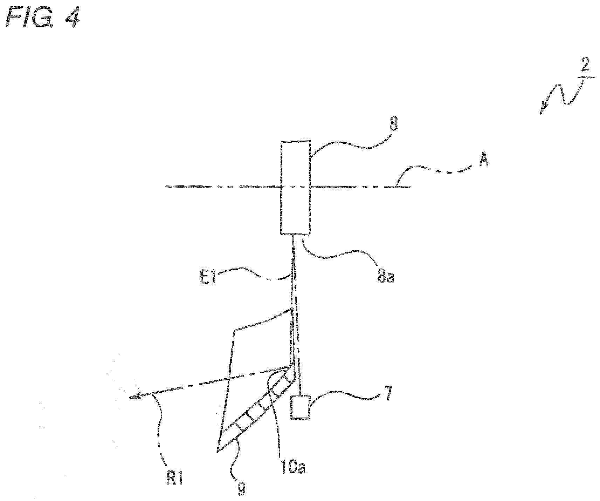

The reflecting surfaces 8a, 8b, 8c, 8d, 8e, 8f are inclined at different angles relative to the rotating axis A (refer to Figs. 4 to 9). An inclined angle of the first reflecting surface 8a relative to the rotating axis A is set the smallest. An inclined angel of the sixth reflecting surface 8f relative to the rotating axis A is set the greatest. Inclined angles of the second reflecting surface 8b, the third reflecting surface 8c, the fourth reflecting surface 8d and the fifth reflecting surface 8e relative to the rotating axis A are set greater sequentially in that order.

Light emitted from the light source 7 is reflected on anyone of the reflecting surfaces 8a, 8b, 8c, 8d, 8e, 8f according to a rotating position of the rotary reflector 8. Respective lights reflected on the reflecting surfaces 8a, 8b, 8c, 8d, 8e, 8f are incident on corresponding positions on the light control member 9.

The light control member 9 is disposed ahead of or behind the light source 7 and below the rotary reflector 8. In the following description, the light control member 9 will be described as being disposed ahead of the light source 7.

The light control member 9 has a surface which is directed obliquely upwards, and this surface is formed as a control surface 10 (refer to Fig. 3). The light control member 9 controls light which is reflected by the rotary reflector 8 so that a range of an angle at which the reflected light is emitted in a circumferential direction of the rotary reflector 8 is narrowed.

The control surface 10 has six horizontally elongated areas which are formed sequentially from an upper side thereof. These six areas are formed sequentially as a first control area 10a, a second control area 10b, a third control area 10c, a fourth control area 10d, a fifth control area 10e, and a sixth control area 10f on the control surface 10. Broken lines are given to the control surface 10 shown in Fig. 3 as a matter of convenience to ease the understanding of the positions of the control areas 10a, 10b, 10c, 10d, 10e, 10f.

In the first lamp unit 2 configured in the way described above, when light is emitted from the light source 7, the light so emitted is reflected by anyone of the reflecting surfaces 8a, 8b, 8c, 8d, 8e, 8f according to a rotating position of the rotary reflector 8 (refer to Figs. 3 to 9). Lights reflected on the reflecting surfaces 8a, 8b, 8c, 8d, 8e, 8f are incident on the control areas 10a, 10b, 10c, 10d, 10c, 10f, respectively, as reflected lights E (E1 to E6) on to the control surface 10 and are then reflected individually on the control areas 10a, 10b, 10c, 10d, 10e, 10f to be shone to the front as illumination lights R (R1 to R6).

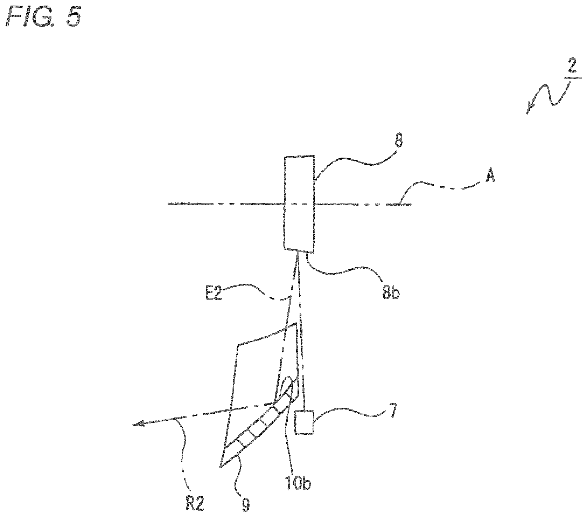

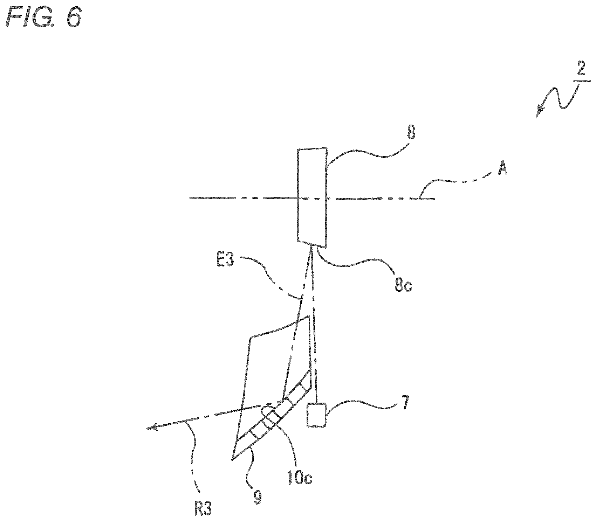

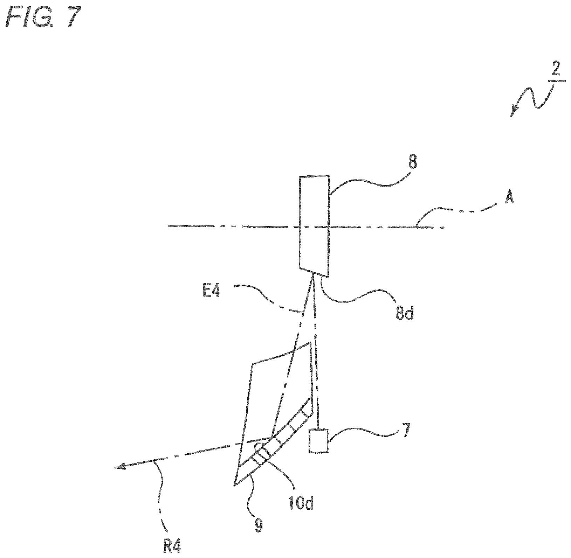

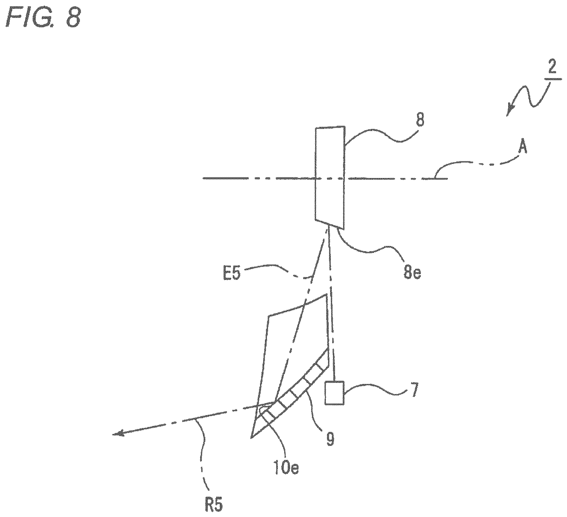

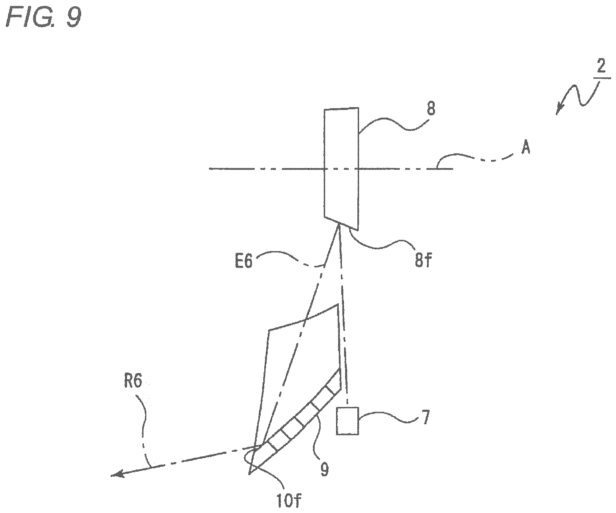

Specifically, light reflected on the first reflecting surface 8a is incident on the control area 10a as a reflected light E1 and is then reflected on the first control area 10a to be shone to the front as an illumination light R1 (refer to Figs. 3 and 4). Light reflected on the second reflecting surface 8b is incident on the second control area 10b as a reflected light E2 and is then reflected on the second control area 10b to be shone to the front as an illumination light R2 (refer to Fig. 5). Light reflected on the third reflecting surface 8c is incident on the third control area 10c as a reflected light E3 and is then reflected on the third control area 10c to be shone to the front as an illumination light R3 (refer to Fig. 6). Light reflected on the fourth reflecting surface 8d is incident on the fourth control area 10d as a reflected light E4 and is then reflected on the fourth control area 10d to be shone to the front as an illumination light R4 (refer to Fig. 7). Light reflected on the fifth reflecting surface 8e is incident on the fifth control area 10e as a reflected light E5 and is then reflected on the fifth control area 10e to be shone to the front as an illumination light R5 (refer to Fig. 8). Light reflected on the sixth reflecting surface 8f is incident on the sixth control area 10f as a reflected light E6 and is then reflected on the sixth control area 10f to be shone to the front as an illumination light R6 (refer to Fig. 9).

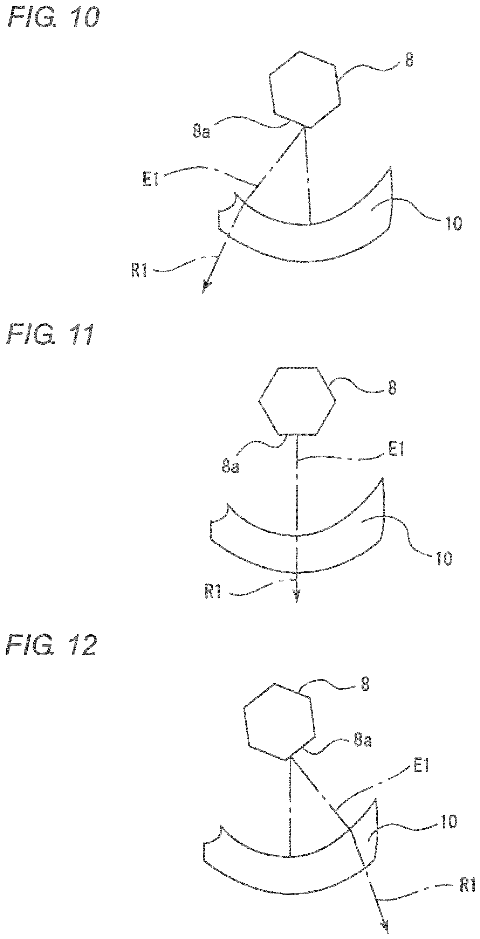

As has been described above, when light is emitted from the light source 7 to the rotary reflector 8, since the rotary reflector 8 is rotating about the rotating axis A as a fulcrum, respective orientations of the reflecting surfaces 8a, 8b, 8c, 8d, 8e, 8f relative to the light source 7 are changed gradually. Consequently, lights incident on the reflecting surfaces 8a, 8b, 8c, 8d, 8e, 8f are reflected at angles which correspond to their incident angles to be incident on the corresponding control areas 10a, 10b, 10c, 10d, 10e, 10f in different positions. Namely, the reflected lights E1, E2, E3, E4, E5, E6 are incident on the control areas 10a, 10b, 10c, 10d, 10e, 10f, respectively, in a continuous or intermittent fashion (refer to Figs. 10 to 12).

For example, when the first reflecting surface 8a is inclined rightward, the reflected light E1 is incident on a rightward portion of the first control area 10a (refer to Fig. 10). When the first reflecting surface 8a is oriented downwards without being inclined, the reflected light E1 is incident on a central portion of the first control area 10a in a lef-to-right direction (refer to Fig. 11). When the first reflecting surface 8a is inclined leftwards, the reflected light E1 is incident on a leftward portion of the first control area 10a (refer to Fig. 12).

Although not shown, this will be true with the reflected lights E2, E3, E4, E5, E6 which are reflected on the reflecting surfaces 8b, 8c, 8d, 8e, 8f, respectively. For example, when the reflecting surfaces 8b, 8c, 8d, 8e, 8f are inclined rightwards, oriented downwards and inclined leftwards, the reflected lights E2, E3, E4, E5, E6 are incident on rightward portions, central portions in the left-to-right direction and leftward portions on the control areas 10b, 10c, 10d, 10e, 10f, respectively.

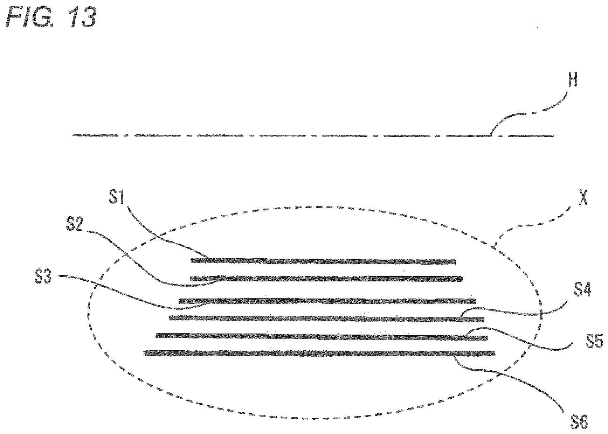

The illumination lights R1, R2, R3, R4, R5, R6 are shone substantially parallel to one another to the front and are controlled by the light control member 9 so as to be collected to an illumination area X which is situated, for example, below a horizontal line H in the shining direction (forward) (refer to Figs. 13 to 15).

Horizontal lines S1, S2, S3, S4, S5, S6 shown in Fig. 13 show a state in which the illumination lights R1, R2, R3, R4, R5, R6 are shone sequentially in that order when the rotary reflector 8 is rotated a full rotation from the first reflecting surface 8a to the sixth reflecting surface 8f in such a state that light is emitted from the light source 7.

In the vehicle lamp 1, the rotary reflector 8 rotates continuously at high speeds, and the lights like scanning lines described above are shone on to the illumination area X continuously and repeatedly in an extremely short length of time. Because of this, the lights like scanning lines which are shone on to the illumination area X are visualized as afterimages, resulting in a state in which a certain quantity of light is shone continuously to the illumination area X in a pseudo fashion. When the rotary reflector 8 is rotated at high speeds in such a state that the light source 7 is turned on, the first light unit 2 is used as a low beam lamp unit or a high beam lamp unit. When the light source 7 is turned on, the first lamp unit 2 may be used as various sign lamps including a stop lamp, a tail lamp and a cornering lamp.

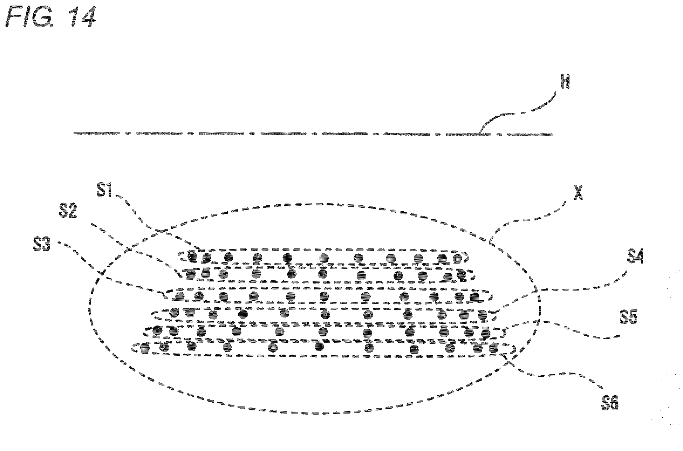

On the other hand, when the rotary reflector 8 is rotated a full rotation from the first reflecting surface 8a to the sixth reflecting surface 8f in such a state that the light source 7 is turned on and off, a plurality of dot-like lights are shone on to the illumination area X intermittently (refer to Fig. 14). Horizontal lines S1, S2, S3, S4, S5, S6 (refer to six frames of dotted lines in Fig. 14) which are each a collection of a plurality of dot-like lights shown in Fig. 14 show a state in which the illumination lights R1, R2, R3, R4, R5, R6 are shone sequentially in that order.

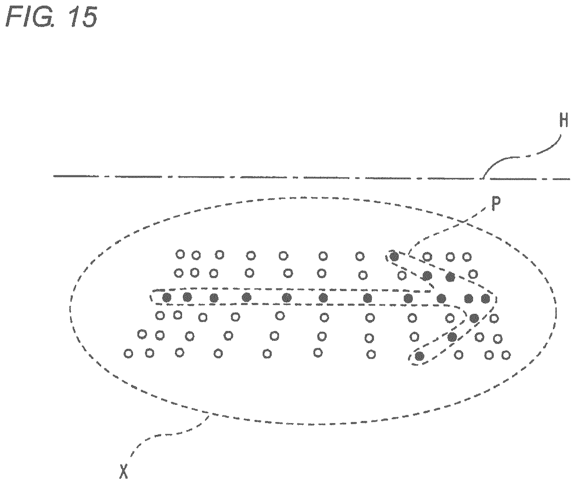

In the vehicle lamp 1, the rotary reflector 8 is rotated continuously at high speeds in such a state that the light source 7 is controlled to be turned on and off according to a rotating position of the rotary reflector 8, and the plurality of dot-like lights described above are shone on to the illumination area X in an extremely short length of time. Because of this, as shown in Fig. 15, a collection of those dot-like lights which are shone on to the illumination area X at an arbitrary timing is visualized as an afterimage of a predetermined figure, symbol or a character like an arrow P, for example. In this way, when the rotary reflector 8 is rotated at high speeds in such a state that the timings at which the light source 7 is turned on and off are controlled, the first lamp unit 2 is used as a drawing lamp unit which indicates a figure, symbol or character. These figures, symbols or characters are visualized by a driver of a vehicle or a pedestrian as a sign.

Thus, as has been described heretofore, in the vehicle lamp 1, the angles at which the first reflecting surface 8a, the second reflecting surface 8b, the third reflecting surface 8c, the fourth reflecting surface 8d, the fifth reflecting surface 8e, and the sixth reflecting surface 8f are inclined relative to the rotating axis A are different, and the positions of the reflected lights E (E1 to E6) which are incident on the light control member 9 are changed according to the rotating position of the rotary reflector 8.

Consequently, the shining range and direction of the reflected lights E (E1 to E6) are not limited when the rotary reflector 8 is rotated which reflects the light emitted from the light source 7, thereby making it possible to improve the degree of freedom relating to the direction and range of the light which is reflected on the rotary reflector 8.

In addition, in the vehicle lamp 1, a figure, symbol or character can be drawn in the shining direction of the lights as a result of the light source 7 being turned on and off according to the rotating position of the rotary reflector 8. Consequently, a driver of an on-coming vehicle or a pedestrian can be warned, thereby making it possible to realize an improvement in safety when the vehicle is running.

Further, in the vehicle lamp 1, the control of the light is eased by the simple configuration by using a fixed reflector as the light control member 9.

Furthermore, as has been described above, the reflected lights E (E1 to E6) which are incident on the light control member 9 are shone therefrom so as to be collected below the horizontal line H as the illumination lights R (R 1 to R6). This can prevent drivers of a preceding vehicle and an on-coming vehicle from being dazzled in such a state that the lights are shone on to the range required by the application.

In the vehicle lamp 1, the lights reflected on the reflecting surfaces 8a, 8b, 8c, 8d, 8e, 8f and controlled by the light control member 9 so as to be shone on to the illumination area X are formed into the straight lines which correspond individually to the reflecting surfaces 8a, 8b, 8c, 8d, 8e, 8f. Because of this, the controlling of the direction and range in which the lights are shone can be eased, and the controlling of the timings at which the light source is turned on and off can also be eased.

In the embodiment described above, while the rotary reflector 8 is described as having the six reflecting surfaces 8a, 8b, 8c, 8d, 8e, 8f, the number of reflecting surfaces formed on the rotary reflector is not limited to six, and hence, as long as a plurality of reflecting surfaces are formed, the number of reflecting surfaces to be formed is arbitrary. As this occurs, in case the number of reflecting surfaces is small, the angle at which the reflected light is emitted in the circumferential direction of the rotary reflector 8, is expanded. On the other hand, in case the number of reflecting surfaces is great, the angle at which the reflected light is emitted in the circumferential direction of the rotary reflector 8, is narrowed. However, the size of the illumination area X can be controlled by the use of the light control member 9.

In addition, in case the number of reflecting surfaces on the rotary reflector 8 is small, the number of connecting portions (corner portions) between the reflecting surfaces of the rotary reflector 8 is decreased, and therefore, the loss of light emitted from the light source 7 and reflected by the rotary reflector 8 becomes small. This can enhance the shining efficiency of light to the illumination area X, and a circumferential resolution can also be enhanced. Consequently, the number of reflecting surfaces to be formed on the rotary reflector 8 may be determined as required depending upon the required illumination range and resolution, as well as the application of the lamp unit.

In the embodiment described above, while the light source 7 is described as being turned on or off according to the rotating position of the rotary reflector 8, for example, the light source 7 is dimmed according to the rotating position of the rotary reflector 8 so that dimmed light is shone.

In the embodiment described above, while the lights are described as being collected below the horizontal line H, the lights may be controlled by the light control member 9 so as to be shone across or above the horizontal line H. As this occurs, the vehicle lamp 1 is used as a high beam lamp unit or a lamp unit for an overhead lamp which illuminates a sign which is situated overhead.

While the invention has been described in detail and by reference to the specific embodiment, it is obvious to those skilled in the art to which the invention pertains that various alterations and/or modifications can be made thereto without departing from the scope of the invention as defined in the appended claims. This patent application is based upon the Japanese Patent Application No. 2013-084739 filed on April 15, 2013.

### Description of Reference Numerals and Characters

1 vehicle lamp; 2 lamp unit; 3 lamp body; 4 cover; 5 lamp shell; 7 light source; 8 rotary reflector; 8a first reflecting surface; 8b second reflecting surface; 8c third reflecting surface; 8d fourth reflecting surface; 8e fifth reflecting surface; 8f sixth reflecting surface; 9 light control member; A rotating axis; X illumination area

## Claims

1. A vehicle lamp (1) in which a lamp unit (2) is provided in an interior of a lamp shell (5) which is defined by a cover (4) and a lamp housing (3), in which the lamp unit (2) comprises:
a light source (7) which emits light;
a rotary reflector (8) which is rotated about a rotating axis A as a fulcrum and which has a plurality of reflecting surfaces (8a,b,c,d,e,f) which reflect light emitted from the light source (7); and
a light control member (9) on which lights (E1,E2,E3,E4,E5,E6) , reflected on the plurality of reflecting surfaces (8a,b,c,d,e,f) are incident and which controls the incident lights (E1,E2,E3,E4,E5,E6), and
angles at which the plurality of reflecting surfaces (8a,b,c,d,e,f) are inclined relative to the rotating axis A are different from one another so that an incident position (10a,b,c,d,e,f) where the reflected lights (E1,E2,E3,E4,E5,E6) are incident on the light control member (10) changes according to a rotating position of the rotary reflector (8)
**characterized in that**
the light control member (9) is a fixed reflector and
the lights (E1,E2,E3,E4,E5,E6) which are reflected on the reflecting surfaces (8a,b,c,d,e,f) and are then controlled by the light control member (9) so as to be shone on to an illumination area (X) are each (R1,R2,R3,R4,R5,R6) shone into a straight line (S1,S2,S3,S4,S5,S6) for each reflecting surface (8a,b,c,d,e,f) in the illumination area (X).

2. The vehicle lamp according to Claim 1, **characterized in that** the light source (7) is turned on and off or varies its brightness according to a rotating position of the rotary reflector (8).

3. The vehicle lamp according to any one of Claims 1 or 2, **characterized in that** the light control member (9) controls the lights (E1,E2,E3,E4,E5,E6) incident thereon so as to be collected below a horizontal line (H) in a shining direction.

## Patentansprüche

1. Fahrzeugleuchte (1), in der einen Leuchteneinheit (2) in einem Inneren einer Leuchtenumhüllung (5) bereitgestellt wird, die durch eine Abdeckung (4) und eine Leuchtengehäuse (3) definiert wird, in der die Leuchteneinheit (2) umfasst:
eine Lichtquelle (7), die Licht emittiert;
einen drehbaren Reflektor (8), der um eine Rotationsachse A als einem Drehpunkt gedreht wird und der eine Vielzahl von reflektierenden Oberflächen (8a, b, c, d, e, f) hat, die von der Lichtquelle (7) emittiertes Licht reflektieren; und
ein Lichtsteuerelement (9), auf das von der Vielzahl von reflektierenden Oberflächen (8a, b, c, d, e, f) reflektiertes Licht (E1, E2, E3, E4, E5, E6) einfällt und das das einfallende Licht (E1, E2, E3, E4, E5, E6) steuert,
wobei sich Winkel, in denen die Vielzahl von reflektierenden Oberflächen (8a, b, c, d, e, f) relativ zur Rotationsachse A geneigt sind, voneinander unterscheiden, so dass sich eine Einfallposition (10a, b, c, d, e, f), wo das reflektierte Licht (E1, E2, E3, E4, E5, E6) auf das Lichtsteuerelement (10) einfällt, entsprechend der Rotationsposition des drehbaren Reflektors (8) ändert,
**dadurch gekennzeichnet, dass**
das Lichtsteuerelement (9) ein fester Reflektor ist und das Licht (E1, E2, E3, E4, E5, E6), das auf die reflektierenden Oberflächen (8a, b, c, d, e, f) reflektiert wird und dann durch das Lichtsteuerelement (9) so gesteuert wird, dass es auf einen Beleuchtungsbereich (X) leuchtet, jeweils (R1, R2, R3, R4, R5, R6) in eine gerade Linie (S1, S2, S3, S4, S5, S6) für jede reflektierende Oberfläche (8a, b, c, d, e, f) im Beleuchtungsbereich (X) leuchtet.

2. Fahrzeugleuchte (1) nach Anspruch 1, **dadurch gekennzeichnet, dass** die Lichtquelle (7) entsprechend der Rotationsposition des drehbaren Reflektors (8) ein- und ausgeschaltet wird oder ihre Helligkeit variiert.

3. Fahrzeugleuchte nach einem der Ansprüche 1 oder 2, **dadurch gekennzeichnet, dass** das Lichtsteuerelement (9) das Licht (E1, E2, E3, E4, E5, E6), das darauf einfällt, so steuert, dass es sich unter einer horizontalen Linie (H) in einer Leuchtrichtung sammelt.

## Revendications

1. Lampe de véhicule (1) dans laquelle une unité de lampe (2) est prévue à l'intérieur d'un boîtier de lampe (5) qui est défini par un capot (4) et un logement de lampe (3), dans laquelle l'unité de lampe (2) comprend :
une source de lumière (7) qui émet de la lumière ;
un réflecteur rotatif (8) qui est tourné autour d'un axe de rotation A en guise de point de pivotement et qui possède une pluralité de surfaces réfléchissantes (8a, b, c, d, e, f) qui réfléchissent la lumière émise par la source de lumière (7) ; et
un élément de régulation de la lumière (9) sur lequel les lumières (El, E2, E3, E4, E5, E6) réfléchies sur la pluralité de surfaces réfléchissantes (8a, b, c, d, e, f) sont incidentes et qui régule les lumières incidentes (El, E2, E3, E4, E5, E6), et les angles auxquels la pluralité de surfaces réfléchissantes (8a, b, c, d, e, f) sont inclinées par rapport à l'axe de rotation A sont différents les uns des autres de sorte qu'un emplacement incident (10a, b, c, d, e, f) où les lumières réfléchies (El, E2, E3, E4, E5, E6) sont incidentes sur l'élément de régulation de la lumière (10) change selon une position de rotation du réflecteur rotatif (8),
**caractérisée en ce que**
l'élément de régulation de la lumière (9) est un réflecteur fixe, et
les lumières (El, E2, E3, E4, E5, E6) qui sont réfléchies sur les surfaces réfléchissantes (8a, b, c, d, e, f) et sont ensuite régulées par l'élément de régulation de la lumière (9) de façon à briller vers une zone d'éclairage (X) brillent chacune (R1, R2, R3, R4, R5, R6) vers une ligne droite (S1, S2, S3, S4, S5, S6) pour chaque surface réfléchissante (8a, b, c, d, e, f) dans la zone d'éclairage (X).

2. Lampe de véhicule selon la revendication 1, **caractérisée en ce que** la source de lumière (7) est allumée et éteinte ou varie sa luminosité selon une position de rotation du réflecteur rotatif (8).

3. Lampe de véhicule selon l'une quelconque des revendications 1 ou 2, **caractérisée en ce que** l'élément de régulation de la lumière (9) régule les lumières (El, E2, E3, E4, E5, E6) incidentes dessus de façon à ce qu'elles soient collectées sous une ligne horizontale (H) dans une direction de brillance.
